# EUROPÄISCHE PATENTANMELDUNG

(11) **EP 4 763 614 A1**
(43) Veröffentlichungstag der Anmeldung: **24.06.2026**
(21) Anmeldenummer: 25212535.6
(22) Anmeldetag: 31.10.2025
(51) Int. Cl.: B60P 7/08, F16B 37/04

(54) **EINSTÜCKIGES BEFESTIGUNGSELEMENT**

(30) Priorität: 19.12.2024 DE 102024212168
(71) Anmelder: Siemens Mobility GmbH, 80997 München (DE)
(72) Erfinder: Drews, Michael, 47829 Krefeld (DE); Reschat, Thomas, 47829 Krefeld (DE)
(74) Vertreter: Siemens Patent Attorneys

(57) **Zusammenfassung**

Die Erfindung betrifft ein einstückiges Befestigungselement (10a). Das einstückige Befestigungselement (10a) weist eine Basis (11) mit einer Frontseite (12) und einer Rückseite (13) auf. Teil des einstückigen Befestigungselements (10a) ist auch ein Befestigungsabschnitt (14) an der Rückseite (13) der Basis (11). Der Befestigungsabschnitt (14) ist zum formschlüssigen und kraftschlüssigen Befestigen des einstückigen Befestigungselements (10a) an einer C-Schiene (5), welche zwei Schenkel (6) und eine Nut (7) umfasst, ausgebildet. Das formschlüssige und kraftschlüssige Befestigen erfolgt derart, dass die Befestigung durch ein Einfügen des Befestigungsabschnitts (14) in die Nut (7) und ein Eingreifen des Befestigungsabschnitts (14) hinter die beiden Schenkel (6) erreicht wird. Das einstückige Befestigungselement (10a) umfasst auch einen Aufnahmeabschnitt (16) an der Frontseite (12), welcher zur Aufnahme eines spezifischen Bauteils (21) ausgebildet ist. Es wird auch ein Befestigungssystem beschrieben. Weiterhin wird ein Wagenkasten (122) beschrieben. Es wird ferner ein Schienenfahrzeug (121) beschrieben, welches ein einstückiges Befestigungselement (10a) und eine C-Schiene (5) umfasst. Außerdem wird ein Verfahren zur Montage eines Bauteils (21) im Inneren eines Wagenkastens (121) beschrieben.

## Beschreibung

Die Erfindung betrifft ein einstückiges Befestigungselement. Weiterhin bezieht sich die Erfindung auf ein Befestigungssystem mit dem erfindungsgemäßen einstückigen Befestigungselement und einer C-Schiene, an der das einstückige Befestigungselement montiert ist. Darüber hinaus betrifft die Erfindung einen Wagenkasten mit einem solchen einstückigen Befestigungselement und einer C-Schiene. Zudem bezieht sich die Erfindung auf ein Schienenfahrzeug. Außerdem betrifft die Erfindung ein Verfahren zur Montage eines Bauteils an einer C-Schiene.

Befestigungselemente werden benötigt, um Bauteile an einem Grundkörper zu befestigen. Ein solcher Grundkörper kann zum Beispiel ein Gehäuse oder eine Wand oder ähnliche Strukturen aufweisen, die sich selbst aufgrund ihrer Grundstruktur nicht direkt eignen, um ein Bauteil daran zu befestigen. Ein Bauteil wird in oder an dem Grundkörper installiert, um eine spezifische technische Funktion wahrzunehmen, die sich von der allgemeinen Funktion des Grundkörpers unterscheidet.

Beispielsweise kann ein solcher Grundkörper einen Wagenkasten eines Wagons oder Schienenfahrzeugs umfassen und weist in diesem Fall als Funktion den Schutz von Passagieren oder Zugpersonal gegenüber der Einwirkung der Umwelt auf. Die in dem Wagenkasten befestigten Bauteile oder Installationsteile, beispielsweise Leuchten, Belüftungsrohre, Kabel, Schläuche und insbesondere Rauchgasansaugrohrleitungen, haben dagegen spezifische Aufgaben, die sich von der Grundfunktion des Wagenkastens abheben.

Um die Funktionsfähigkeit und Dauerhaftigkeit der Bauteile sowie die Sicherheit der Nutzer zu gewährleisten, müssen die Bauteile ausreichend fest an dem Grundkörper fixiert sein.

Zur Fixierung von Bauteilen in Schienenfahrzeugen weisen die Wagenkästen der Schienenfahrzeuge auf ihrer Innenseite sogenannte C-Schienen auf, an denen Befestigungselemente mit Hilfe von Schraubverbindungen fixiert sind. Eine solche C-Schiene weist ein meist eckiges C-Profil auf, wobei zwischen zwei einander gegenüberliegenden Profilvorsprüngen bzw. Schenkelprofilen eine nutartige Vertiefung liegt.

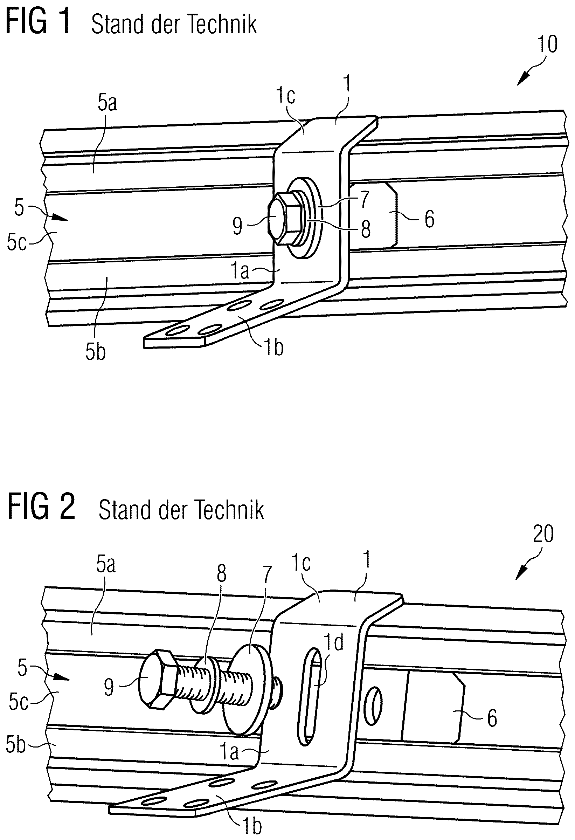

Herkömmliche Befestigungselemente weisen meistens eine winkelförmige Gestalt mit einer mittleren flächigen Basis und zwei in einander entgegengesetzte Richtungen zu der mittleren flächigen Basis abgewinkelte flächige Winkelschenkel auf. Die flächige Basis dient der Fixierung des herkömmlichen Befestigungselements an der C-Schiene. Ein erster flächiger Winkelschenkel ist an einem ersten Ende der flächigen Basis angeordnet, ist in eine erste Richtung abgewinkelt und dient der Fixierung des Bauteils an dem Befestigungselement. Ein zweiter flächiger Winkelschenkel ist an einem zweiten Ende der flächigen Basis angeordnet und ist damit dem ersten Winkelschenkel gegenüberliegend angeordnet. Der zweite flächige Winkelschenkel ist in eine im Vergleich zu dem ersten flächigen Winkelschenkel entgegengesetzte Richtung abgewinkelt und dient der besseren formschlüssigen Verbindung des Befestigungselements mit der C-Schiene. Zum Festschrauben des Befestigungselements bzw. der flächigen Basis an der C-Schiene wird in die nutartige Vertiefung der C-Schiene ein sogenannter Nutenstein eingefügt, der ein Innengewinde umfasst, durch das eine Befestigungsschraube geführt wird. Weitere Komponenten zur Befestigung sind Unterlegscheiben und/oder Muttern, mit denen die Befestigungsschraube festgezogen wird. Der erste flächige Winkelschenkel des Befestigungselements weist zur Befestigung des Bauteils an dem Befestigungselement Aussparungen auf, an denen weitere Befestigungsteile, die eine Adapterfunktion und eine geeignete Form aufweisen, die an die Gestalt der zu befestigenden Bauteile angepasst ist, montierbar sind. Ein herkömmliches Befestigungselement zusammen mit den zu dessen Montage verwendeten weiteren Komponenten ist in FIG 1 und FIG 2, einmal in montierter Form und einmal mit einer Explosionszeichnung veranschaulicht, dargestellt.

Da die Befestigungselemente insbesondere in einem Wagenkasten in großer Zahl auftreten und selbst mehrere Komponenten haben, die aneinander festmontiert werden müssen, ist ihre Produktion und Installation mit einem erheblichen Ressourcenaufwand verbunden. Weiterhin weisen herkömmliche Befestigungselemente ein vergleichsweise hohes Gewicht auf, da sie aus Blech hergestellt sind und außerdem eine Vielzahl von Teilen aufweisen.

Es besteht also die Aufgabe, Befestigungselemente für die Fixierung von Bauteilen in einem Wagenkasten zu entwickeln, deren Herstellung und/oder Installation im Vergleich zum Stand der Technik vereinfacht ist.

Diese Aufgabe wird durch ein einstückiges Befestigungselement gemäß Patentanspruch 1, ein Befestigungssystem gemäß Patentanspruch 11, einen Wagenkasten gemäß Patentanspruch 12, ein Schienenfahrzeug gemäß Patentanspruch 13 und ein Verfahren zur Montage eines Bauteils an einer C-Schiene gemäß Patentanspruch 14 gelöst.

Das erfindungsgemäße einstückige Befestigungselement weist eine Basis mit einer Frontseite und einer Rückseite auf. Teil des einstückigen Befestigungselements ist auch ein Befestigungsabschnitt an der Rückseite der Basis. Der Befestigungsabschnitt ist zum formschlüssigen und kraftschlüssigen Befestigen des einstückigen Befestigungselements an einer C-Schiene, welche zwei Schenkel und eine Nut umfasst, ausgebildet. Das formschlüssige und kraftschlüssige Befestigen erfolgt derart, dass die Befestigung durch ein Einfügen des Befestigungsabschnitts in die Nut und ein Eingreifen des Befestigungsabschnitts hinter die beiden Schenkel erfolgt. Das einstückige Befestigungselement umfasst auch einen Aufnahmeabschnitt an der Frontseite, welcher zur Aufnahme eines spezifischen Bauteils bzw. eines für die Gestalt des Aufnahmeabschnitts spezifischen Bauteils ausgebildet ist. Vorteilhaft kann durch den einstückigen Aufbau des erfindungsgemäßen einstückigen Befestigungselements der Montageaufwand von Bauteilen, welche mit dem einstückigen Befestigungselement an einem Grundkörper, insbesondere an der Innenseite eines Wagenkastens, montiert werden, stark reduziert werden. Insbesondere bei der Montage von Rohren, Leitungen oder Kabeln, für die eine Vielzahl solcher Befestigungselemente benötigt werden, kann die Montagezeit erheblich reduziert werden. Außerdem ist der Aufwand für die Herstellung und Logistik aufgrund der Reduzierung der Anzahl der benötigten Teile ebenfalls reduziert. Das einstückige Befestigungselement weist auch im Vergleich zu herkömmlichen Vorrichtungen ein deutlich geringeres Gewicht im Vergleich auf. Wird es für das Halten einer Rauchgasansaugrohrleitung vorgesehen und ist es aus einem Kunststoff, bevorzugt aus einem leichten Kunststoff, hergestellt, was besonders bevorzugt ist, so beträgt das Gewicht etwa 10 g, während herkömmliche Befestigungselemente aus Blech und zusätzlich mit Nutenstein, Schraube und Unterlegscheiben ungefähr 170 g wiegen. Als Materialien werden vorzugsweise Kunststoffe verwendet, die den Normen EN 45545 HL2/3 R22 und R23 genügen.

Das erfindungsgemäße Befestigungssystem weist das erfindungsgemäße einstückige Befestigungselement und eine C-Schiene auf, an der das erfindungsgemäße einstückige Befestigungselement befestigt ist. Das erfindungsgemäße Befestigungssystem teilt die Vorteile des erfindungsgemäßen einstückigen Befestigungselements. Das erfindungsgemäße Befestigungssystem kann auch eine Mehrzahl von einstückigen Befestigungselementen umfassen, die an unterschiedlichen Positionen der C-Schiene angeordnet und befestigt werden. Vorteilhaft kann bei einer solchen Auslegung auch ein Bauteil mit einer großen Längsausdehnung, insbesondere Kabel, Rohre und Leitungen, besonders bevorzugt, Rauchgasansaugrohrleitungen, längs einer C-Schiene verlegt werden, wobei das Bauteil mit einer Mehrzahl von einstückigen Befestigungselementen an der C-Schiene fixiert ist. Alternativ können so auch mehrere weniger ausgedehnte Bauteile an einer einzigen C-Schiene in Längsrichtung verteilt angeordnet werden.

Der erfindungsgemäße Wagenkasten weist das erfindungsgemäße einstückige Befestigungselement und eine C-Schiene auf. In Wagenkästen von Schienenfahrzeugen werden Rauchgasansaugrohrleitungen mit Hilfe des erfindungsgemäßen einstückigen Befestigungselements verlegt. Der erfindungsgemäße Wagenkasten teilt die Vorteile des erfindungsgemäßen einstückigen Befestigungselements.

Das erfindungsgemäße Schienenfahrzeug weist das erfindungsgemäße einstückige Befestigungselement und eine C-Schiene auf. Das erfindungsgemäße Schienenfahrzeug teilt die Vorteile des erfindungsgemäßen einstückigen Befestigungselements.

Bei dem erfindungsgemäßen Verfahren zur Montage eines Bauteils an einer C-Schiene mit einem erfindungsgemäßen einstückigen Bauelement, vorzugsweise im Inneren eines erfindungsgemäßen Wagenkastens, erfolgt ein kraftschlüssiges und formschlüssiges Befestigen des einstückigen Befestigungselements mit dessen Befestigungsabschnitt an einer C-Schiene, welche zwei Schenkel und eine Nut umfasst. Das Befestigen wird derart realisiert, dass die Befestigung durch ein Einfügen des Befestigungsabschnitts in die Nut und ein Eingreifen des Befestigungsabschnitts hinter die beiden Schenkel erfolgt. Weiterhin wird ein spezifisches Bauteil in den Aufnahmeabschnitt eingefügt. Das erfindungsgemäße Verfahren teilt die Vorteile des erfindungsgemäßen einstückigen Befestigungselements. Insbesondere wird die Montage des Bauteils aufgrund der reduzierten Anzahl von Komponenten vereinfacht und zeitlich verkürzt.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer Variante des erfindungsgemäßen einstückigen Befestigungselements weist der Befestigungsabschnitt einen Vorsprung auf, welcher derart ausgebildet ist, dass er in die Nut der C-Schiene einfügbar ist und durch eine Drehbewegung des einstückigen Befestigungselements mit der C-Schiene durch einen Formschluss verbindbar ist, derart, dass der Befestigungsabschnitt des Befestigungselements nach der Drehung des Befestigungselements an der C-Schiene fixiert ist. Der Vorsprung ist insbesondere hinsichtlich seiner Abmessungen derart angepasst, dass er zwischen die Schenkel der C-Schiene in die Nut der C-Schiene hineingeschoben werden kann. Die Drehbewegung führt dazu, dass der Vorsprung unter die Schenkel der C-Schiene greift und auch mit diesen eine Klemmverbindung eingeht. Durch diesen Formschluss und Kraftschluss wird die Fixierung des Befestigungselements an der C-Schiene erreicht.

Die durch eine Drehung erfolgte Fixierung des Befestigungsabschnitts des Befestigungselements an der C-Schiene ist also insbesondere derart ausgestaltet, dass das Befestigungselement
- durch ein formschlüssiges Eingreifen des Vorsprungs hinter die beiden Schenkel der C-Schiene, insbesondere hinter die beiden Enden der beiden Schenkel der C-Schiene, gegen eine lineare Ablösebewegung von der C-Schiene gesichert ist, und
- durch eine Klemmkraft zwischen den beiden Schenkeln, der Nut und dem Vorsprung gegen eine rotationsartige Ablösebewegung von der C-Schiene gesichert ist.

Vorteilhaft wird aufgrund des Kraftschlusses und Formschlusses im Gegensatz zum Stand der Technik keine Schraubverbindung zum Fixieren des Befestigungsabschnitts des Befestigungselements an der C-Schiene benötigt.

In einer Ausgestaltung des erfindungsgemäßen einstückigen Befestigungselements umfasst der Vorsprung einen zu der Rückseite hingewandten ersten Abschnitt mit einem runden Querschnitt. Der runde Querschnitt erlaubt gerade ein Drehen des Vorsprungs zwischen den C-Schienen, um einen Formschluss und damit ein Hintergreifen des Vorsprungs hinter die Schenkel der C-Schienen zu ermöglichen.

Hierzu weist der erste Abschnitt eine senkrecht zu dem runden Querschnitt ausgebildete Rotationsachse auf. Die Drehbewegung vor der Fixierung des Befestigungsabschnitts des Befestigungselements erfolgt vorteilhaft um die Rotationsachse des ersten Abschnitts.

Um ein Hintergreifen des Vorsprungs hinter die Schenkel der C-Schiene zu ermöglichen, umfasst der Vorsprung des Befestigungsabschnitts des erfindungsgemäßen einstückigen Befestigungselements einen zweiten Abschnitt, der zumindest teilweise über den runden Querschnitt des ersten Abschnitts quer zur Rotationsachse hervorsteht, derart, dass der durch das Hervorstehen erzeugte Vorsprung in Querrichtung zur Rotationsachse nach der Drehbewegung und unter die Enden der Schenkel der C-Schiene eingreift und auf diese Weise eine formschlüssige Fixierung des einstückigen Befestigungselement an der C-Schiene generiert, wenn das einstückige Befestigungselement quer zum Längsverlauf der C-Schiene orientiert ist und damit in seiner Fixierpose angeordnet ist. Der Vorsprung weist also eine pilzartige Form oder eine T-Form auf, wobei der erste Abschnitt einen runden oder vorzugsweise kreisförmigen Querschnitt aufweist und somit den Stil des Pilzes bzw. des T bildet und der zweite Abschnitt den Hut des Pilzes bzw. Balken des T bildet und nach der Rotation um die Rotationsachse des ersten Abschnitts unter die Schenkel der C-Schiene greift. Der Vorsprung des zweiten Abschnitts in Querrichtung zur Rotationsachse ist vorzugsweise in Längsrichtung des einstückigen Befestigungselements ausgerichtet bzw. ausgebildet, so dass nach einer Rotation, wenn das einstückige Befestigungselement quer zur C-Schiene ausgerichtet ist, auch der Vorsprung des zweiten Abschnitts in Querrichtung zur Rotationsachse quer zur Längsrichtung der C-Schiene ausgerichtet ist und somit unter die Enden der Schenkel der C-Schiene greift, welche ebenfalls in Querrichtung der C-Schiene hervorspringen.

Um einen Kraftschluss zwischen dem Vorsprung und den Schenkeln der C-Schiene zu erreichen, ist die axiale Abmessung des ersten Abschnitts auf die Abmessung der C-Schenkel und der Enden der Schenkel der C-Schiene abgestimmt, derart, dass die Enden der Schenkel der C-Schiene nach der Drehbewegung zur Fixierung des einstückigen Befestigungselements an der C-Schiene zwischen die Basis des einstückigen Befestigungselements und den durch das Hervorstehen erzeugten Vorsprung des zweiten Abschnitts des Vorsprungs geklemmt sind. Wird als spezifisches Bauteil ein Rohr oder eine Leitung oder ein Kabel verwendet, so stabilisiert die langgestreckte Form des spezifischen Bauteils die Position bzw. Pose des einstückigen Befestigungselements zusätzlich. Mithin müssen die Klemmkräfte zwischen Vorsprung, Basis und Schenkeln nicht so groß sein, um eine Fixierung des Befestigungselements in der gewünschten Pose an der C-Schiene zu erreichen und beizubehalten.

In einer bevorzugten Ausgestaltung des einstückigen Befestigungselements weist die Basis eine längliche Form mit einem ersten axialen Ende und einem zweiten axialen Ende einer Längsachse auf. Der Befestigungsabschnitt ist nun bevorzugt an dem ersten axialen Ende angeordnet und der Aufnahmeabschnitt ist bevorzugt an dem zweiten axialen Ende angeordnet. Vorteilhaft ist das Befestigungselement in dieser vorteilhaften Variante aufgrund der länglichen Form gut handhabbar und kann das spezifische Bauteil ausreichend weit von der C-Schiene distanzieren, damit die beiden Komponenten ausreichend Platz haben. Besonders vorteilhaft kann aufgrund des Abstands zwischen dem Befestigungsabschnitt und dem Aufnahmeabschnitt erreicht werden, dass die C-Schiene nicht mit den installierten spezifischen Bauteilen verdeckt wird. Der Vorteil der Vermeidung einer Verdeckung der C-Schiene besteht darin, dass die C-Schiene weiterhin für eine Befestigung zusätzlicher Komponenten zusätzlich zu den installierten spezifischen Bauteilen genutzt werden kann.

Bevorzugt umfasst das erfindungsgemäße einstückige Befestigungselement eine an der Frontseite der Basis angeordnete stegförmige Verstrebung, welche mit von der Basis entfernt angeordneten Teilabschnitten des Aufnahmeabschnitts verbunden ist. Durch die zusätzliche Verbindung der von der Basis entfernt angeordneten Teilabschnitte des Aufnahmeabschnitts mit der Basis wird die mechanische Festigkeit des Aufnahmeabschnitts und des gesamten einstückigen Befestigungselements verbessert.

Bevorzugt weist der Aufnahmeabschnitt des erfindungsgemäßen einstückigen Befestigungselements einen C-förmigen Querschnitt zur Aufnahme eines Schlauchs oder Rohrs mit einem runden Querschnitt auf. Hierzu umfasst der Aufnahmeabschnitt selbst eine halbringförmige Gestalt, um ein spezifisches zylinderförmiges Bauteil, insbesondere einen Schlauch, ein Rohr oder ein Kabel, aufzunehmen.

In einer ebenfalls vorteilhaften Variante des erfindungsgemäßen einstückigen Befestigungselements ist die Basis des einstückigen Befestigungselements abgeknickt, was auch als Kröpfung bezeichnet wird. Bevorzugt ist die Basis im Bereich des Aufnahmeabschnitts auf der Rückseite der Basis etwas abgeknickt. Auf diese Weise kann die Form des einstückigen Befestigungselements an geometrische Anforderungen bzw. Randbedingungen angepasst werden. Vorteilhaft kann der Aufnahmeabschnitt auch nach oben hin orientiert angeordnet werden, ohne mit der Seitenwand eines Schienenfahrzeugs, welche nach oben hin zur Mitte des Innenraums hin gewölbt verlaufen kann, zu kollidieren.

Die Erfindung wird im Folgenden unter Hinweis auf die beigefügten Figuren anhand von Ausführungsbeispielen noch einmal näher erläutert. Es zeigen:
- FIG 1: eine schematische Darstellung eines herkömmlichen Befestigungselements zur Befestigung eines Bauteils an einer C-Schiene,
- FIG 2: eine schematische Darstellung einer Explosionszeichnung eines herkömmlichen Befestigungselements zur Befestigung eines Bauteils an einer C-Schiene,
- FIG 3: eine schematische Darstellung eines einstückigen Befestigungselements gemäß einem Ausführungsbeispiel der Erfindung, welches in einer C-Schiene befestigt ist,
- FIG 4: eine schematische Darstellung des in FIG 3 gezeigten einstückigen Befestigungselements mit einer Rauchansaugrohrleitung, welche in dem Aufnahmeabschnitt des einstückigen Befestigungselements gehalten wird,
- FIG 5: eine perspektivische Frontdarstellung eines einstückigen Befestigungselements gemäß einem Ausführungsbeispiel der Erfindung,
- FIG 6: eine perspektivische Rückseitenansicht eines einstückigen Befestigungselements gemäß einem Ausführungsbeispiel der Erfindung,
- FIG 7: eine schematische Draufsicht auf ein einstückiges Befestigungselement gemäß einem Ausführungsbeispiel der Erfindung während des Einfügens in eine C-Schiene in einer ersten Pose,
- FIG 8: eine schematische Draufsicht auf das in FIG 7 gezeigte einstückige Befestigungselement in einer zweiten Pose bzw. Endpose nach der Montage,
- FIG 9: eine Schnittansicht eines einstückigen Befestigungselements gemäß einem Ausführungsbeispiel der Erfindung, welches in einer C-Schiene befestigt ist, mit nach unten gewendetem Aufnahmeabschnitt,
- FIG 10: eine Schnittansicht eines einstückigen Befestigungselements gemäß einem Ausführungsbeispiel der Erfindung, welches in einer C-Schiene befestigt ist, mit nach oben gewendetem Aufnahmeabschnitt,
- FIG 11: eine Schnittansicht eines gekröpften einstückigen Befestigungselements gemäß einem Ausführungsbeispiel der Erfindung, welches in einer C-Schiene befestigt ist,
- FIG 12: eine schematische Darstellung eines Schienenfahrzeugs gemäß einem Ausführungsbeispiel der Erfindung,
- FIG 13: ein Flussdiagramm, welches ein Verfahren zur Montage eines Bauteils im Inneren eines Wagenkastens veranschaulicht.

In FIG 1 ist eine schematische Darstellung 10 eines herkömmlichen Befestigungselements 1 zur Befestigung einer Rauchgasansaugrohrleitung an einer C-Schiene 5 im Inneren eines Wagenkastens veranschaulicht. Die C-Schiene 5 weist eine Nut 5c und zwei Schenkel 5a, 5b auf, die in FIG 1 aus der Zeichnungsebene hervorstehen.

Das Befestigungselement 1 weist eine winkelförmige Gestalt mit einer mittleren flächigen Basis 1 und zwei in einander entgegengesetzte Richtungen zu der mittleren flächigen Basis 1 abgewinkelte flächige Winkelschenkel 1b, 1c auf. Die flächige Basis 1a dient der Fixierung des herkömmlichen Befestigungselements 1 der C-Schiene 5.

Ein erster flächiger Winkelschenkel 1b ist an einem ersten Ende der flächigen Basis 1a, in FIG 1 im unteren Bildabschnitt dargestellt, angeordnet und ist nach vorne bzw. bei bestimmungsgemäßer Montage des Befestigungselements 1 von der C-Schiene 5 weg abgewinkelt. Der erste flächige Winkelschenkel 1b umfasst vier Bohrungen, welche zur Montage eines zu befestigenden Bauteils (in FIG 1 nicht gezeigt) nutzbar sind.

Ein zweiter flächiger Winkelschenkel 1c ist an einem zweiten Ende der flächigen Basis 1a, welche in FIG 1 im oberen Bildabschnitt dargestellt ist, angeordnet. Wie in FIG 1 zu erkennen ist, ist der zweite flächige Winkelschenkel 1c zu der C-Schiene 5 hin abgewinkelt, und zwar derart, dass bei bestimmungsgemäßer Montage des Befestigungselements 1 an der C-Schiene 5 der zweite flächige Winkelschenkel 1c mit der Außenseite des in FIG 1 oberen Schenkels 5a der C-Schiene 5 konform ausgerichtet ist und sich daran abstützt.

Der zweite flächige Winkelschenkel 1c dient der besseren formschlüssigen Verbindung des Befestigungselements 1 mit der C-Schiene 5 bzw. mit dem oberen Schenkel 5a der C-Schiene 5.

Zum Festschrauben des Befestigungselements 1 bzw. der flächigen Basis 1a an der C-Schiene 5 wird in die Nut 5c der C-Schiene 5 ein sogenannter Nutenstein 6 eingefügt, der ein Innengewinde umfasst, durch das eine Befestigungsschraube 9 geführt wird. Weitere Komponenten zur Befestigung der Befestigungsschraube 9 mit der Basis 1a des Befestigungselements 1 an dem Nutenstein 6 sind eine große Unterlegscheibe 7 und ein Profilring 8, mit denen die Befestigungsschraube 9 festgezogen wird. Durch die Schraubverbindung wird eine reibschlüssige bzw. kraftschlüssige Verbindung des Befestigungselements 1 mit der C-Schiene 5 erreicht, da das Befestigungselement 1 mit Hilfe des Nutensteins 6 quasi an dem oberen Schenkel 5a der C-Schiene festgeklemmt ist.

In FIG 2 ist eine Explosionszeichnung 20 eines herkömmlichen Befestigungselements 1 zur Befestigung eines Bauteils an einer C-Schiene 5 dargestellt. Die einzelnen Komponenten, insbesondere der Nutenstein 6, die Unterlegescheibe 7, der Profilring 8 und die Befestigungsschraube 9, welche zur Fixierung des herkömmlichen Befestigungselements 1 an der C-Schiene 5 benötigt werden, sind in FIG 2 voneinander abgesetzt dargestellt. In der mittleren flächigen Basis 1a ist ein vertikaler Schlitz 1d zu erkennen, durch den die Befestigungsschraube 9 hindurchgeführt wird.

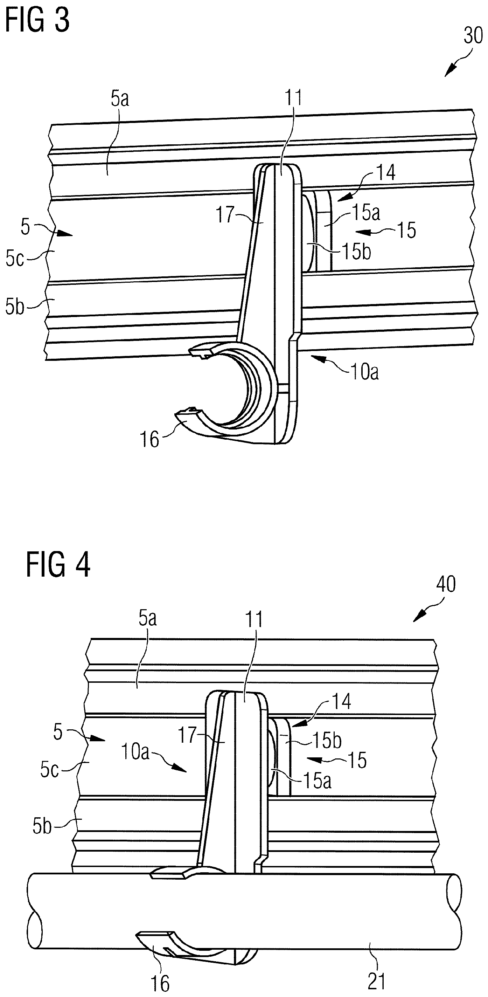

In FIG 3 ist eine schematische Darstellung 30 eines einstückigen Befestigungselements 10a gemäß einem Ausführungsbeispiel der Erfindung, welches in einer C-Schiene 5 befestigt ist, gezeigt.

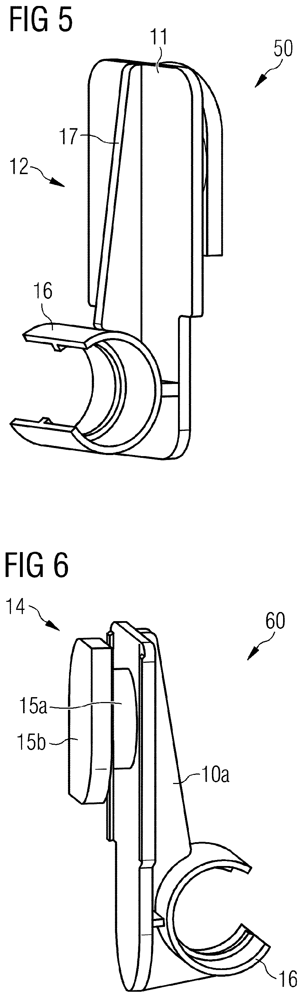

Das einstückige Befestigungselement 10a weist eine Basis 11 mit einer länglichen Form auf. An einem in FIG 3 im oberen Bildabschnitt gezeigten ersten axialen Ende der Basis 11 ist auf der Rückseite ein Befestigungsabschnitt 14 dargestellt, der einen Vorsprung 15 umfasst. Der Vorsprung 15 umfasst einen ersten Abschnitt 15a, der der Rückseite der Basis 11 zugewandt ist und einen kreisförmigen Querschnitt aufweist. Weiterhin weist der Vorsprung 15 einen zweiten Abschnitt 15b auf, der von der Rückseite der Basis 11 abgewandt positioniert ist und mit dem ersten Abschnitt 15a einstückig verbunden ist, aber in Längsrichtung der Basis 11 vor dem ersten Abschnitt 15a hervorsteht (siehe FIG 6, 9, 10, 11). Der zweite Abschnitt 15b greift mit seinen in Längsrichtung der Basis 11 hervorstehenden Enden unter die beiden Schenkel 5a, 5b der C-Schiene 5 und verhindert ein Lösen des einstückigen Befestigungselements 10a durch eine Bewegung senkrecht zur Bildebene durch den derart realisierten Formschluss des Vorsprungs 15 mit den Schenkeln 5a, 5b der C-Schiene 5. Aufgrund eines Kraftschlusses des zweiten Abschnitts 15b und der Basis 11 mit den Schenkeln 5a, 5b der C-Schiene 5 wird auch ein "Herausdrehen" oder Verschieben des einstückigen Befestigungselements 10a aus seiner Position vermieden. Hierzu sind die Abmessungen des ersten Abschnitts 15a an die Abmessungen der Schenkel 5a, 5b entsprechend angepasst, so dass zwischen den hervorstehenden Enden des zweiten Abschnitts 15b bzw. der Basis 11 und den Schenkeln 5a, 5b eine ausreichende Klemmkraft herrscht, um das Befestigungselement 10a per Reibung an seiner gewünschten Position zu halten.

Das einstückige Befestigungselement 10a weist auch einen C-förmigen Aufnahmeabschnitt 16 auf, mit dem ein für die Form des Aufnahmeabschnitts 16 spezifisches Bauteil 21, insbesondere ein Schlauch oder eine Rauchgasansaugrohrleitung (siehe FIG 4), gehalten werden kann. Die Basis 11 weist auch eine stegförmige Verstrebung 17 auf, mit der der Aufnahmeabschnitt 16 verstärkt ist.

In FIG 4 ist eine schematische Darstellung 40 des in FIG 3 gezeigten einstückigen Befestigungselements 10a mit einer Rauchgasansaugrohrleitung 21, welche in dem Aufnahmeabschnitt des einstückigen Befestigungselements 10a gehalten wird, gezeigt. Das Befestigungselement 10a ist wieder an einer C-Schiene 5 fixiert.

In FIG 5 ist eine perspektivische Frontdarstellung 50 eines einstückigen Befestigungselements 10a gemäß einem Ausführungsbeispiel der Erfindung veranschaulicht. In FIG 5 ist der Aufnahmeabschnitt 16, welcher auf der Frontseite 12 der Basis 11 des einstückigen Befestigungselements 10a angeordnet ist, gut zu erkennen.

In FIG 6 ist eine perspektivische Rückseitenansicht 60 eines einstückigen Befestigungselements 10a gemäß einem Ausführungsbeispiel der Erfindung veranschaulicht. In der in FIG 6 dargestellten Rückseitenansicht ist der Befestigungsabschnitt 14 mit seinem Vorsprung 15 mit einem ersten Abschnitt 15a mit einem runden Querschnitt und einem zweiten Abschnitt 15b mit vorstehenden Enden sehr gut zu erkennen.

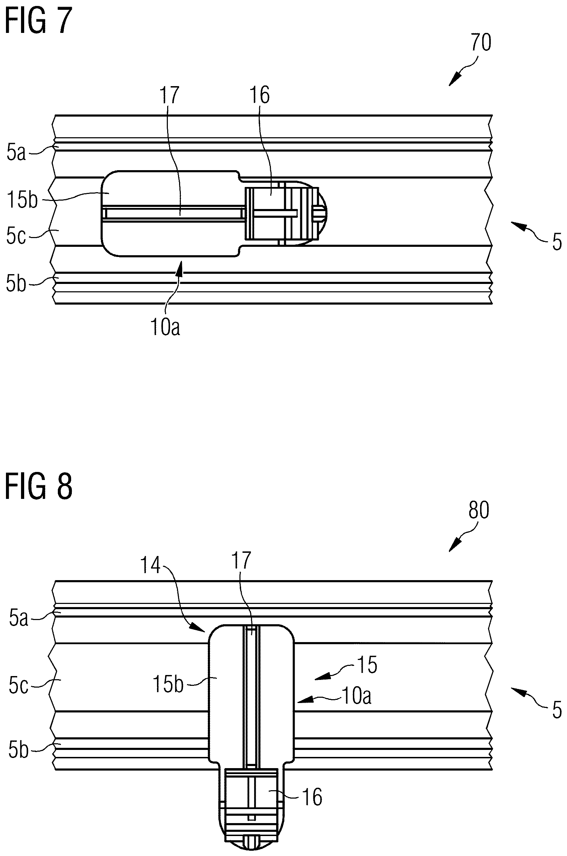

In FIG 7 ist eine schematische Draufsicht 70 auf ein einstückiges Befestigungselement 10a gemäß einem Ausführungsbeispiel der Erfindung während des Einfügens in eine C-Schiene 5 in einer ersten Pose dargestellt. In diesem Stadium ist das einstückige Befestigungselement 10a in Längsrichtung der Nut 5c der C-Schiene 5 eingefügt, aber noch nicht in die C-Schiene 5 eingerastet.

In FIG 8 ist eine schematische Draufsicht 80 auf das in FIG 7 gezeigte einstückige Befestigungselement 10a in einer zweiten Pose gezeigt, in der das einstückige Befestigungselement 10a in Querrichtung der Nut 5c verdreht ist, so dass die vorstehenden Enden des zweiten Abschnitts 15b des Vorsprungs 15 des Befestigungsabschnitts 14 unter den Enden der Schenkel 5a, 5b der C-Schiene 5 bereits eingerastet sind.

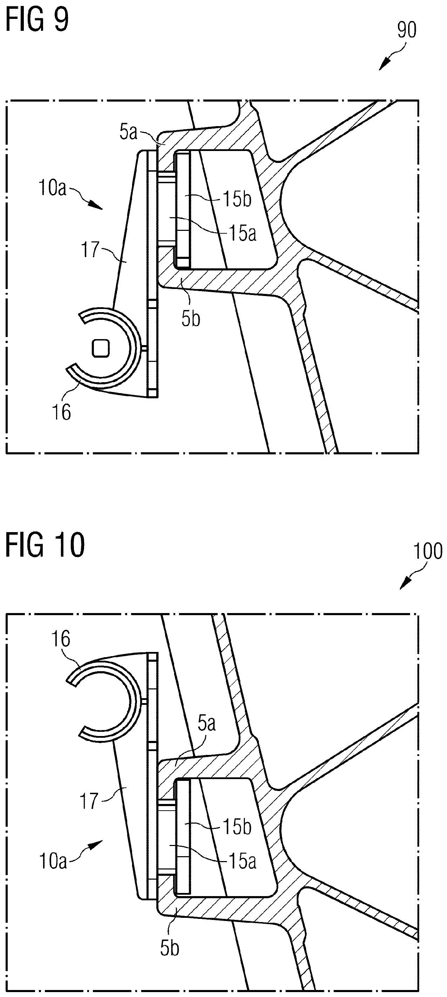

In FIG 9 ist eine Schnittansicht 90 eines einstückigen Befestigungselements 10a gemäß einem Ausführungsbeispiel der Erfindung gezeigt, welches in einer C-Schiene 5 mit nach unten gewendetem Aufnahmeabschnitt 16 befestigt ist.

In FIG 10 ist eine Schnittansicht 100 eines einstückigen Befestigungselements gemäß einem Ausführungsbeispiel der Erfindung gezeigt, welches in einer C-Schiene 5 mit nach oben gewendetem Aufnahmeabschnitt 16 befestigt ist.

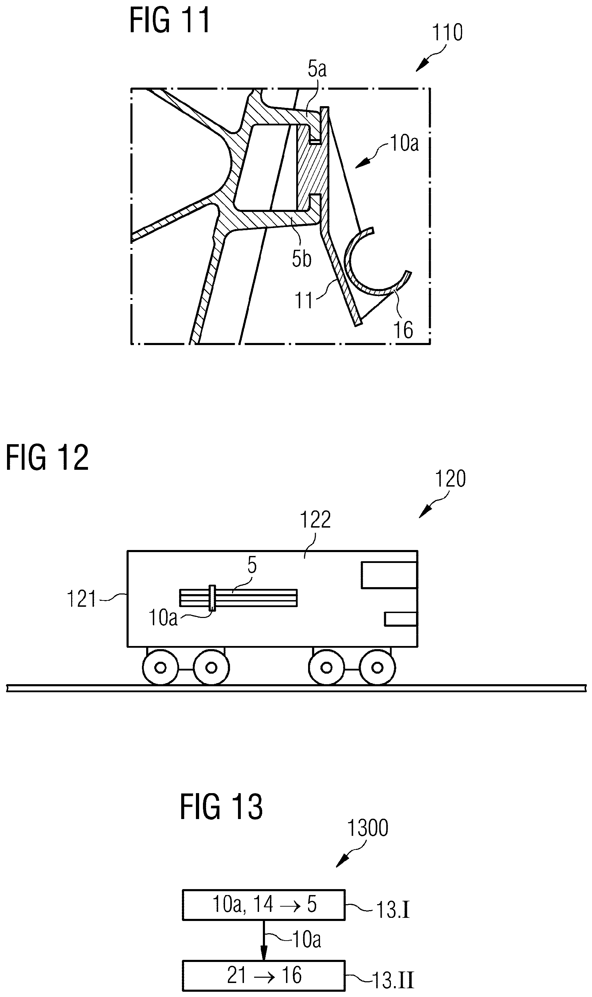

In FIG 11 ist eine Schnittansicht 110 eines gekröpften einstückigen Befestigungselements 10a gemäß einem Ausführungsbeispiel der Erfindung, welches in einer C-Schiene 5 befestigt ist, veranschaulicht. Bei dieser Variante ist die Basis 11 im Bereich des Aufnahmeabschnitts 16 auf der Rückseite 13 der Basis etwas abgeknickt. Auf diese Weise kann die Form des einstückigen Befestigungselements 10a an geometrische Anforderungen bzw. Randbedingungen angepasst werden. Vorteilhaft kann der Aufnahmeabschnitt 16 auch nach oben hin orientiert angeordnet werden (in FIG 11 nicht gezeigt), ohne mit der Seitenwand zu kollidieren.

In FIG 12 ist eine schematische Darstellung 120 eines Schienenfahrzeugs 121 gemäß einem Ausführungsbeispiel der Erfindung veranschaulicht. Das Schienenfahrzeug 121 weist einen Wagenkasten 122 auf. Im Inneren des Wagenkastens 122 ist eine C-Schiene 5 angebracht. An der C-Schiene 5 ist ein einstückiges Befestigungselement 10a gemäß einem Ausführungsbeispiel der Erfindung montiert.

In FIG 13 ist ein Flussdiagramm 1300 gezeigt, welches ein Verfahren zur Montage eines Bauteils 21 im Inneren eines Wagenkastens 122 veranschaulicht.

Bei dem Schritt 13.I erfolgt ein kraftschlüssiges und formschlüssiges Befestigen eines einstückigen Befestigungselements 10a mit deren Befestigungsabschnitt 14 an einer C-Schiene 5, welche zwei Schenkel 5a, 5b und eine Nut 7 umfasst. Das Befestigen erfolgt durch ein Einfügen des Befestigungsabschnitts 14 in die Nut 7 und ein anschließendes Drehen des Befestigungselements 10a, derart, dass durch die Drehung ein Eingreifen des Befestigungsabschnitts 14 hinter die beiden Schenkel 5a, 5b erreicht ist.

Bei dem Schritt 13.II erfolgt ein Einfügen eines spezifischen Bauteils 21, insbesondere einer Rauchgasansaugrohrleitung, in den Aufnahmeabschnitt 16.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können. Unabhängig vom grammatikalischen Geschlecht eines bestimmten Begriffes sind Personen mit männlicher, weiblicher oder anderer Geschlechteridentität mit umfasst.

## Patentansprüche

1. Einstückiges Befestigungselement (10a), aufweisend:
- eine Basis (11) mit einer Frontseite (12) und einer Rückseite (13),
- einen Befestigungsabschnitt (14) an der Rückseite (13) zum formschlüssigen und kraftschlüssigen Befestigen des einstückigen Befestigungselements (10a) an einer C-Schiene (5), welche zwei Schenkel (6) und eine Nut (7) umfasst, derart, dass die Befestigung durch ein Einfügen des Befestigungsabschnitts (14) in die Nut (7) und ein Eingreifen des Befestigungsabschnitts (14) hinter die beiden Schenkel (6) erfolgt,
- einen Aufnahmeabschnitt (16) an der Frontseite (12), welcher zur Aufnahme eines spezifischen Bauteils (21) ausgebildet ist.

2. Einstückiges Befestigungselement nach Anspruch 1,
wobei der Befestigungsabschnitt (14) einen Vorsprung (15) aufweist, welcher derart ausgebildet ist, dass er
- in die Nut (7) der C-Schiene (5) einfügbar ist und
- durch eine Drehbewegung des einstückigen Befestigungselements (10a) mit der C-Schiene (5) durch einen Formschluss verbunden ist, derart, dass der Befestigungsabschnitt (14) nach der Drehung des einstückigen Befestigungselements (10a) an der C-Schiene (5) fixiert ist.

3. Einstückiges Befestigungselement nach Anspruch 2,
wobei die durch die Drehbewegung erfolgte Fixierung des Befestigungsabschnitts (14) an der C-Schiene (5) derart ausgestaltet ist, dass das Befestigungselement (10a)
- durch ein formschlüssiges Eingreifen des Vorsprungs (15) hinter die beiden Schenkel (6) der C-Schiene (5) gegen eine lineare Ablösebewegung von der C-Schiene (5) gesichert ist, und
- durch eine Klemmkraft zwischen den beiden Schenkeln (6), der Nut (7) und dem Vorsprung (15) gegen eine rotationsartige Ablösebewegung von der C-Schiene (5) gesichert ist.

4. Einstückiges Befestigungselement nach Anspruch 2 oder 3,
wobei der Vorsprung (15) einen zu der Rückseite hingewandten ersten Abschnitt (15a) mit einem runden Querschnitt umfasst.

5. Einstückiges Befestigungselement nach Anspruch 4,
wobei der erste Abschnitt (15a) eine senkrecht zu dem runden Querschnitt ausgebildete Rotationsachse umfasst, derart, dass die Drehbewegung vor der Fixierung des Befestigungsabschnitts (14) um die Rotationsachse des ersten Abschnitts (15a) erfolgt.

6. Einstückiges Befestigungselement nach einem der Ansprüche 4 oder 5,
wobei der Vorsprung (15) einen zweiten Abschnitt (15b) umfasst, der zumindest teilweise über den runden Querschnitt des ersten Abschnitts (15a) quer zur Rotationsachse hervorsteht, derart, dass der durch das Hervorstehen erzeugte Vorsprung in Querrichtung zur Rotationsachse nach der Drehbewegung unter die Enden der Schenkel (5a, 5b) der C-Schiene (5) eingreift und auf diese Weise eine formschlüssige Fixierung des einstückigen Befestigungselements (10a) an der C-Schiene (5) generiert.

7. Einstückiges Befestigungselement nach Anspruch 6,
wobei die axiale Abmessung des ersten Abschnitts (15a) auf die Abmessung der Enden der Schenkel (5a, 5b) der C-Schiene (5) abgestimmt ist, derart, dass die Enden der Schenkel (5a, 5b) der C-Schiene (5) nach der Drehbewegung zur Fixierung des Befestigungsabschnitts (14) des einstückigen Befestigungselements (10a) an der C-Schiene (5) zwischen die Basis (11) und den durch das Hervorstehen des zweiten Abschnitts (15b) erzeugten Vorsprung des zweiten Abschnitts (15b) des Vorsprungs (15) geklemmt sind.

8. Einstückiges Befestigungselement nach einem der vorstehenden Ansprüche,
wobei die Basis (11) eine längliche Form mit einem ersten axialen Ende und einem zweiten axialen Ende aufweist und der Befestigungsabschnitt (14) an dem ersten axialen Ende angeordnet ist und der Aufnahmeabschnitt (16) an dem zweiten axialen Ende angeordnet ist.

9. Einstückiges Befestigungselement nach einem der vorstehenden Ansprüche, aufweisend eine an der Frontseite der Basis (11) angeordnete stegförmige Verstrebung, welche mit von der Basis (11) entfernt angeordneten Teilabschnitten des Aufnahmeabschnitts (16) verbunden ist.

10. Einstückiges Befestigungselement nach einem der vorstehenden Ansprüche, wobei der Aufnahmeabschnitt (16) einen C-förmigen Querschnitt zur Aufnahme eines Schlauchs oder Rohrs mit einem runden Querschnitt aufweist.

11. Befestigungssystem, aufweisend:
- ein einstückiges Befestigungselement (10a) nach einem der vorstehenden Ansprüche,
- eine C-Schiene (5), an der das einstückige Befestigungselement (10a) befestigt ist.

12. Wagenkasten (122), aufweisend ein einstückiges Befestigungselement (10a) nach einem der Ansprüche 1 bis 10 und eine C-Schiene (5).

13. Schienenfahrzeug (121), aufweisend ein einstückiges Befestigungselement (10a) nach einem der Ansprüche 1 bis 10 und eine C-Schiene (5).

14. Verfahren zur Montage eines Bauteils (21) an einer C-Schiene (5) mit einem einstückigen Befestigungselement (10a) nach einem der Ansprüche 1 bis 10,
aufweisend die Schritte:
- kraftschlüssiges und formschlüssiges Befestigen des einstückigen Befestigungselements (10a) mit dessen Befestigungsabschnitt (14) an einer C-Schiene (5), welche zwei Schenkel (6) und eine Nut (7) umfasst, derart, dass das kraftschlüssige und formschlüssige Befestigen durch ein Einfügen des Befestigungsabschnitts (14) in die Nut (7) und ein Eingreifen des Befestigungsabschnitts (14) hinter die beiden Schenkel (6) erfolgt,
- Einfügen eines spezifischen Bauteils in den Aufnahmeabschnitt (16).
